# EUROPEAN PATENT APPLICATION

(11) **EP 1 780 251 A1**
(43) Date of publication of application: **02.05.2007**
(21) Application number: 05770517.0
(22) Date of filing: 10.08.2005
(51) Int. Cl.: C09J 4/02, C09J 163/10, C09J 175/16, G11B 7/24

(54) **ADHESIVE COMPOSITION FOR OPTICAL DISK, CURED PRODUCT AND ARTICLE**

(30) Priority: 19.08.2004 JP 2004239958; 19.08.2004 JP 2004239972; 10.09.2004 JP 2004264391; 10.09.2004 JP 2004264401
(71) Applicant: NIPPON KAYAKU KABUSHIKI KAISHA, Tokyo 102-8172 (JP)
(72) Inventor: MIZUTANI, Go, 3330801 Saitama (JP); TOKUDA, Kiyohisa, Saitama-shi, Saitama 3300854 (JP); ISHII, Kazuhiko, Saitama 3501108 (JP); NAITOU, Masahiro, Tokyo 1150042 (JP); MIYAKE, Takeo, Tokyo 1150042 (JP)
(74) Representative: Gille Hrabal Struck Neidlein Prop Roos
(86) International application number: PCT/JP2005/014652
(87) International publication number: WO 2006/019023

(57) **Abstract**

Disclosed is an adhesive which enables to obtain a bonded optical disk, wherein optical disks having a total reflection film or a translucent reflection film made of silver or a silver alloy are bonded together, which exhibits high adhesion strength between the reflection film and a cured product of the adhesive as well as between a polycarbonate substrate and the cured product of the adhesive, while having high durability equivalent to those of the conventional optical disks using translucent reflective film made of gold. Specifically disclosed is an ultraviolet-curable adhesive resin composition containing a bisphenol-type epoxy (meth)acrylate (A), a di(meth)acrylate (B) and a photopolymerization initiator (C) which is **characterized in that** the di(meth)acrylate (B) is composed of one or more selected from a di(meth)acrylate (B-1) having an adipate structure, a di(meth)acrylate (B-2) having a caprolactone-modified structure, an alkylene oxide-modified neopentyl glycol di(meth)acrylate compound (B-3) and an alkylene oxide-modified 1,6-hexanediol di(meth)acrylate compound (B-4).

## Description

### Technical Field

The present invention relates to an ultraviolet-curable adhesive resin composition for bonding optical disk substrates, and more particularly, to an ultraviolet-curable adhesive resin composition for bonding two optical disk substrates, particularly, two optical disk substrates to be used in a digital video disk (hereinafter designates as DVD) and the like, which is curable by ultraviolet to near-ultraviolet, and relates to the thus bonded optical disk.

### Background Art

DVDs in practical use at present can be roughly classified into DVD-ROMs on which information such as movies, etc. has been recorded upon production thereof, and blank DVDs on which no information is recorded upon production and allowing consumers themselves to record information on the dye recording layer or the inorganic recording layer. In DVD-ROMs, information has been recorded in the substrate and there are several types of recording layer structure including: DVD-5 with a recording layer structure of single-sided, single layer read having a recording capacity of about 5 gigabytes, DVD-9 of a single-sided, dual layer read having a recording capacity of about 9 gigabytes, DVD-10 of a double-sided, dual layer read having a recording capacity of about 10 gigabytes, and DVD-18 of a double-sided, quadruple layer read having a recording capacity of about 18 gigabytes. At present DVD-9s are most commonly used because of their recording capacity for recording a movie of about two and a half hours. Since DVD-9 is the single-sided, dual layer read type, the total reflection film and the translucent reflection film are used, and presently, DVD-9s using an aluminum alloy as a total reflection film and gold as a translucent reflection film are most common. Unlike a total reflection film, a translucent reflection film must transmit laser, and so the film needs to be thin. Consequently, gold, which can be easily formed into a thin film and is relatively stable, has been conventionally used.

Gold, however, is very expensive material and therefore the material for the translucent reflection film has been shifted from gold to silicon or silicon compounds, further to silver or silver alloys. In addition, at present, use of blue laser is now being developed for further increase of recording capacity, and although red lasers do not have any problem of laser transmittance in the optical disk even if the material for the translucent reflection film is gold, silicon, silicon compounds, silver or silver alloys, it has been recognized that for blue lasers, silver or silver alloys are effective as the material for the translucent reflection film in view of the transmittance at about 400 nm, which is the wavelength of the blue laser. Silver or silver alloys, however, have a disadvantage that they are more susceptible to oxidation and unstable than gold.

On the other hand, in the field of blank DVDs, there are various formats including DVD-R, DVD+R, DVD-RW, DVD+RW, DVD-RAM, etc. Presently dominant DVD-R, DVD-RAM, DVD+R and DVD+RW are of single-sided, single layer structure, and are produced and used by bonding a polycarbonate substrate to an optical disk substrate having a recording layer and a reflection film layer. With regard to a material for the reflection layer, silver or silver alloys having a high reflectance are used in certain level of thickness. Further, there are types of new format, as in DVD-9 type, having dual layers of translucent reflection film and total reflection film, and silver or silver alloys having high reflectance are used as materials of the reflection layer. However, because silver or silver alloys are more susceptible to oxidation, a protective coat needs to be formed. Although formation of the protective coat has an advantage of achieving a high durability, it involves problems such as decrease of production efficiency, increase of production cost and decrease of production yield of optical disks produced by bonding two optical disk substrates.

As compositions for solving above described disadvantages and problems, Patent Document 1 describes ultraviolet-curable adhesive resin compositions for an optical disk comprising, as a main ingredient, a (meth)acrylate having alicyclic structure used for the production of a bonded optical disk using a translucent reflection film made of silver or a silver alloy, and indicates improved durability. However, there was a problem such that the ultraviolet-curable adhesive resin composition for an optical disk comprising, as a main ingredient, a (meth)acrylate having the alicyclic structure had weak adhesiveness between the translucent reflection film or the total reflection film and the cured product of the adhesive. Patent Documents 2, 3, 4, 5, 6 and 7 describe ultraviolet-curable adhesive resin compositions for an optical disk comprising, as a main ingredient, a urethane (meth)acrylate used for the production of a bonded optical disk using a translucent reflection film made of silver or a silver alloy, and indicates improved durability. However, there is no disclosure about the adhesiveness between the translucent reflection film or the total reflection film and the cured product of the adhesive. Patent Document 8 describes ultraviolet-curable adhesive resin compositions for an optical disk comprising, as a main ingredient, an epoxy (meth)acrylate, and indicates suppressing formation of bubbles. However, there is also no disclosure about the adhesiveness between the translucent reflection film or the total reflection film and the cured product of the adhesive.
Patent Document 1: Japanese Patent Application Laying Open (KOKAI) No. 2001-167478
Patent Document 2: Japanese Patent Application Laying Open (KOKAI) No. 2002-92961
Patent Document 3: Japanese Patent Application Laying Open (KOKAI) No. 2002-114949
Patent Document 4: Japanese Patent Application Laying Open (KOKAI) No. 2002-155245
Patent Document 5: Japanese Patent Application Laying Open (KOKAI) No. 2002-256228
Patent Document 6: Japanese Patent Application Laying Open (KOKAI) No. 2002-265885
Patent Document 7: Japanese Patent Application Laying Open (KOKAI) No. 2002-265886
Patent Document 8: Japanese Patent Application Laying Open (KOKAI) No. 2004-175866

### Disclosure of the Invention

An object of the present invention is to provide an adhesive resin composition, which enables to impart high durability equivalent to the conventional bonded optical disks using translucent reflective film made of gold and is superior in adhesiveness between the reflection film and a cured product of the adhesive as well as between a polycarbonate substrate and the cured product of the adhesive, in the bonded optical disk obtained by bonding the optical disk substrates having total reflection film or the translucent reflection film made of silver or a silver alloy and etc.

The inventors of the present invention have eagerly made research for solving the above problems and consequently have found that an ultraviolet-curable adhesive resin composition having a specific composition exhibited superior durability and adhesiveness, even in bonding the optical disks having a total reflection film or translucent reflection film made of silver or a silver alloy and etc, and have completed the present invention.

Specifically, the present invention relates to:
(1) An ultraviolet-curable adhesive resin composition comprising a bisphenol-type epoxy (meth)acrylate (A), a di(meth)acrylate (B) and a photopolymerization initiator (C), wherein the di(meth)acrylate (B) is at least one di(meth)acrylate selected from the group consisting of a di(meth)acrylate (B-1) having an adipate structure, a di(meth)acrylate (B-2) having a caprolactone-modified structure, an alkylene oxide-modified neopentyl glycol di(meth)acrylate compound (B-3) and an alkylene oxide-modified 1,6-hexanediol di(meth)acrylate compound (B-4);
(2) The ultraviolet-curable adhesive resin composition according to (1), wherein the di(meth)acrylate (B-1) having an adipate structure is bis(acryloxyneopentyl glycol) adipate;
(3) The ultraviolet-curable adhesive resin composition according to (1), wherein the di(meth)acrylate (B-2) having a caprolactone-modified structure is caprolactone-modified neopentyl glycol hydroxpivalate diacrylate;
(4) The ultraviolet-curable adhesive resin composition according to (1), wherein the alkylene oxide-modified neopentyl glycol di(meth)acrylate compound (B-3) is at least one diacrylate selected from the group consisting of propylene oxide -added (2 moles) neopentyl glycol diacrylate, ethylene oxide-modified neopentyl glycol diacrylate and propylene oxide-modified neopentyl glycol diacrylate;
(5) The ultraviolet-curable adhesive resin composition according to (1), wherein the alkylene oxide-modified 1,6-hexanediol di(meth)acrylate compound (B-4) is at least one diacrylate selected from the group consisting of propylene oxide-added (2 moles) 1,6-hexanediol diacrylate and ethylene oxide-modified 1,6-hexanediol diacrylate;
(6) The ultraviolet-curable adhesive resin composition according to any one of (1) to (5) further comprising a (meth)acrylate phosphate (D);
(7) The ultraviolet-curable adhesive resin composition according to any one of (1) to (6) further comprising a urethane (meth)acrylate (E);
(8) The ultraviolet-curable adhesive resin composition according to any one of (1) to (7) further comprising an antioxidant (F);
(9) An article having a cured layer of the ultraviolet-curable adhesive resin composition according to any one of (1) to (8);
(10) A bonded optical disk, wherein the bonded optical disk having a cured layer of the ultraviolet-curable adhesive resin composition according to any one of (1) to (8);
(11) The bonded optical disk according to (10), wherein at least one of two optical disk substrates is an optical disk substrate having a total reflection film or a translucent reflection film made of silver or a silver alloy; and
(12) The bonded optical disk according to (11), wherein one of two optical disk substrates is an optical disk substrate having a total reflection film or a translucent reflection film made of silver or a silver alloy.

### Advantages of the Invention

In the bonded optical disk using the translucent reflection film or the total reflection film made of silver or a silver alloy, high durability equivalent to the conventional bonded optical disks using translucent reflection film of gold can be obtained by bonding optical disk substrates using the adhesive resin composition of the present invention, and high adhesive strength between the translucent reflection film or the total reflection film and the cured product of the adhesive can be obtained. In the blank DVD using silver or a silver alloy in the reflection film among the blank DVD including DVD-R, DVD+R, DVD-RW, DVD+RW, DVD-RAM, etc., high durability equivalent to the case using a protective coat can be obtained, further high adhesion strength between the metallic reflection film and the cured product of the adhesive as well as between the polycarbonate substrate and the cured product of the adhesive can be obtained. The bonded optical disk is not separated even by repeated use of the DVD due to strong adhesive strength.

### Best Mode for Carrying Out the Invention

The adhesive resin composition of the present invention contains a bisphenol-type epoxy (meth)acrylate (A), a di(meth)acrylate (B) and a photopolymerization initiator (C). In the present invention, (meth)acrylate means methacrylate or acrylate. Further, in the present invention, di(meth)acrylate (B) means at least one di(meth)acrylate selected from the group consisting of a di(meth)acrylate (B-1) having an adipate structure, a di(meth)acrylate (B-2) having a caprolactone-modified structure, an alkylene oxide-modified neopentyl glycol di(meth)acrylate compound (B-3) and an alkylene oxide-modified 1,6-hexanediol di(meth)acrylate compound (B-4).

The bisphenol-type epoxy (meth)acrylate (A) contained in the composition of the present invention may be an epoxy (meth)acrylate obtained by the reaction of bisphenol-type epoxy resin with (meth)acrylic acid under the reaction conditions, for example, described below. Examples of the bisphenol-type epoxy resin which can be mentioned are, for example, bisphenol A-type epoxy resin (e.g. EPA-37 produced by Nippon Kayaku Co., Ltd.; Epicoat 802, 1001, 1004, etc. produced by Japan Epoxy Resins Co., Ltd.) or bisphenol F-type epoxy resin (e.g. Epicoat 4001P, 4002P, 4003P, etc. produced by Japan Epoxy Resins Co., Ltd.), or bisphenol S-type epoxy resin (e.g. BPS-1, BPS-N, BPS-P, etc. produced by Nicca Chemical Co., Ltd.), preferably bisphenol A glycidyl ether diacrylate (EPA-37).

The bisphenol-type epoxy (meth)acrylate (A) contained in the composition of the present invention can also be obtained, for example, by reacting (meth)acrylic acid in a ratio of 0.9 - 1.5 equivalent, more preferably 0.95 - 1.1 equivalent with one mole of the epoxy group in bisphenol-type epoxy resin. In this reaction, the reaction temperature is preferably 80 - 120°C and the reaction time is about 10 - 35 hours. In order to accelerate the reaction, for example, use of catalyst such as triphenyl phosphine, triethanolamine, tetraethylammonium chloride, etc. is preferable. Further, during the reaction, polymerization inhibitor (e.g. p-methoxyphenol, methylhydroquinone, etc.) can also be used.

In the adhesive resin composition of the present invention, one type of the bisphenol-type epoxy (meth)acrylate (A) may be used alone or at least two types of the bisphenol-type epoxy (meth)acrylate (A) may be used by mixing them at any ratio. The content of the bisphenol-type epoxy (meth)acrylate (A) in the ultraviolet-curable resin composition is generally 1 - 70% by weight, preferably 5 - 50% by weight. Molecular weight of the bisphenol-type epoxy (meth)acrylate (A) is preferably 500 - 10000.

The di(meth)acrylate (B-1) having an adipate structure contained in the adhesive resin composition of the present invention has a function for improving adhesiveness between the metal reflection film made of silver or a silver alloy or aluminum and the cured product of the adhesive as well as between the polycarbonate substrate and the cured product of the adhesive, since it has an action of reducing the volumetric shrink ratio and softening the cured film by an effect of the adipate moiety with flexibility.

The di(meth)acrylate (B-1) having an adipate structure can be obtained by dehydrative condensation reaction of diol having an adipate structure with (meth)acrylic acid. Specifically, for example, bis(acryloxy neopentyl glycol) adipate or modification thereof [e.g. caprolactone-modified bis(acryloxy neopentyl glycol) adipate, polyether-modified bis(acryloxy neopentyl glycol) adipate, etc.] can be mentioned. Preferable example is bis(acryloxy neopentyl glycol) adipate. These are commercially available, for example, as a product of Nippon Kayaku Co., Ltd., KAYARAD R-526 [bis(acryloxy neopentyl glycol) adipate].
The di(meth)acrylate (B-2) having a caprolactone-modified structure contained in the adhesive resin composition of the present invention has a function for improving adhesiveness between the metal reflection film made of silver, a silver alloy or aluminum and the cured product of the adhesive as well as between the polycarbonate substrate and the cured product of the adhesive by an effect of the caprolactone-modified structure.

The di(meth)acrylate (B-2) having a caprolactone-modified structure can be obtained by a dehydrative condensation reaction of diol having caprolactone-modified structure with (meth)acrylic acid. Specifically, for example, caprolactone-modified neopentyl glycol hydroxpivalate di(meth)acrylate (e.g., KAYARAD HX-220 and KAYARAD HX-660 produced by Nippon Kayaku Co., Ltd.), di(meth)acrylate of ε-caprolactone adduct of hydrogenated bisphenol A, di(meth)acrylate of ε-caprolactone adduct of cyclohexane-1,4-dimethanol, etc. can be mentioned, and caprolactone-modified neopentyl glycol hydroxpivalate di(meth)acrylate is preferable. These are commercially available, for example, as KAYARAD HX-220, KAYARAD HX-660 [general formula (I) set forth below], produced by Nippon Kayaku Co., Ltd.

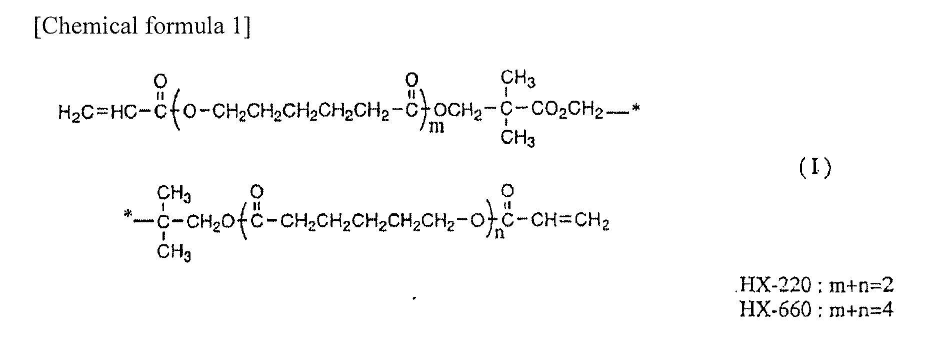

The alkylene oxide-modified neopentyl glycol di(meth)acrylate compound (B-3) and the alkylene oxide-modified 1,6-hexanediol di(meth)acrylate compound (B-4) have a function to improve adhesiveness with the metal reflection film made of silver, a silver alloy and aluminum by the flexibility effect of the alkylene oxide.

Specific examples of the alkylene oxide-modified neopentyl glycol di(meth)acrylate compound (B-3) which can be mentioned are ethylene oxide-modified neopentyl glycol di(meth)acrylate, propylene oxide-modified neopentyl glycol di(meth)acrylate, etc. The addition amount of alkylene oxide in these modifications is preferably 1 - 6 moles, more preferably 2 - 4 moles.

Specific examples of the alkylene oxide-modified 1,6-hexanediol di(meth)acrylate compound (B-4) which can be mentioned are ethylene oxide-modified 1,6-hexanediol di(meth)acrylate, propylene oxide-modified 1,6-hexanediol di(meth)acrylate, etc. The addition amount of alkylene oxide in these modifications is preferably 1 - 6 moles, more preferably 2 - 4 moles.

In the adhesive resin composition of the present invention, one type of the (B) component may be used alone or at least two types of the (B) component may be used by mixing them at any ratio. The content of the (B) component in the ultraviolet-curable resin composition is generally 5 - 90% by weight, preferably 10 - 85% by weight.

A (meth)acrylate monomer (B') other than the above (B) component can be added to the adhesive resin composition of the present invention. Specific examples of the (B') component which can be used are monofunctional monomers, for example tricyclodecane (meth)acrylate, dicyclopentadiene-oxyethyl (meth)acrylate, dicyclopentanyl (meth)acrylate, isobornyl (meth)acrylate, adamantyl (meth)acrylate, phenoxyethyl (meth)acrylate, phenoxypolyethylene glycol (meth)acrylate, benzyl (meth)acrylate, tetrahydrofurfuryl (meth)acrylate, morpholine (meth)acrylate, phenylglycidyl (meth)acrylate, 2-hydroxypropyl (meth)acrylate, lauryl (meth)acrylate, isodecyl (meth)acrylate, stearyl (meth)acrylate, isooctyl (meth)acrylate, tridecyl (meth)acrylate, ethoxydiethylene glycol (meth)acrylate, etc.

Another example of the (B') component is polyfunctional (meth)acrylate monomer having 2 or more (meth)acrylate groups in the molecule. For example, cyclohexane-1,4-dimethanol di(meth)acrylate, cyclohexane-1,3-dimethanol di(meth)acrylate, tricyclodecane dimethylol di(meth)acrylate (e.g. KAYARAD R-684 produced by Nippon Kayaku Co., Ltd., tricyclodecane dimethylol diacrylate, etc.), hydroxypivalaldehyde-modified trimethylolpropane di(meth)acrylate, hydrogenated bisphenol A polyethoxy di(meth)acrylate, hydrogenated bisphenol A polypropoxy di(meth)acrylate, hydrogenated bisphenol F polyethoxy di(meth)acrylate, polyethoxy di(meth)acrylate of cyclohexane-1,4-dimethanol, di(meth)acrylate of ε-caprolactone adduct of hydrogenated bisphenol A, di(meth)acrylate of ε-caprolactone adduct of cyclohexane-1,4-dimethanol, di(meth)acrylate of hydrogenated bisphenol A diglycidyl ether, di(meth)acrylate of hydrogenated bisphenol F diglycidyl ether, neopentyl glycol di(meth)acrylate, polyethylene glycol di(meth)acrylate, dicyclopentanyl di(meth)acrylate, 1,6-hexanediol di(meth)acrylate, polypropylene glycol di(meth)acrylate, ethylene oxide-modified bisphenol A di(meth)acrylate, ethylene oxide-modified trimethylolpropane tri(meth)acrylate, ethylene oxide-modified pentaerythritol tetra(meth)acrylate, tris[(meth)acryloxyethyl] isocyanulate, ethylene oxide-modified dipentaerythritol hexa(meth)acrylate, etc. can also be used.

In the adhesive resin composition of the present invention, one type of the (meth)acrylate monomer (B') may be used alone or at least two types of the (meth)acrylate monomer (B') may be used by mixing them at any ratio. The content of the (meth)acrylate monomer (B') in the ultraviolet-curable resin composition of the present invention is generally 0 - 85% by weight, preferably 10 - 60% by weight.

Examples of the photopolymerization initiator (C) contained in the adhesive resin composition of the present invention which can be mentioned are, for example:
(a) 1-hydroxycyclohexyl phenylketone, 2,2-dimethoxy-2-phenylacetophenodroxy-2-methyl-1-phenylpropan-1-one, 1-[4-(2-hydroxyethoxy)-phenyl]-2-hydroxy-2-methyl-1-propan-1-one or 2-methyl-[4-(methylthio)phenyl]-2-morpholino-1-propanone, 2-benzyl-2-dimethylamino-1-(4-morpholinophenyl)-butan-1-one, etc.; as well as
(b) 2-benzyl-2-dimethylamino-1-(4-morpholinophenyl)-butan-1-one, 2-chlorothioxanthone, 2,4-dimethylthioxanthone, 2,4-diisopropylthioxanthone, isopropylthioxanthone, 2,4,6-trimethylbenzoyl diphosphine oxide or bis(2,6-dimethoxybenzoyl)-2,4,4-trimethylpentyl phosphine oxide, etc.
   One type of the compound can be used alone or at least two types of the compound may be used by mixing them at any ratio. In the present invention, 1-hydroxycyclohexylphenylketone and 2-benzyl-2-dimethylamino-1-(4-morpholinophenyl)-butan-1-one can be preferably used. The content of the photopolymerization initiator (C) in the adhesive resin composition of the present invention when it is selected from (a) is generally 0.5 - 20% by weight, preferably 1 - 10% by weight. Further, when it is selected from (b), the content is generally 0.005 - 5% by weight, preferably 0.01 - 3% by weight.

In addition, amines, etc. which can be an auxiliary photopolymerization initiator may be used in combination with the above photopolymerization initiator. Amines, etc. which can be used are benzoic acid 2-dimethylaminoethyl ester, dimethylamino acetophenone, p-dimethylaminobenzoic acid ethyl ester or p-dimethylaminobenzoic acid isoamyl ester, etc. When the auxiliary photopolymerization initiator of the amines, etc. is used, the content in the adhesive resin composition of the present invention is generally 0.005 - 5% by weight, preferably 0.01 - 3% by weight.

A (meth)acrylate phosphate (D) can be added, if necessary, in the adhesive resin composition of the present invention. Although the (meth)acrylate phosphate (D) improves adhesiveness between silver or a silver alloy and the cured product of the adhesive, it is in danger of corroding metallic film and hence an amount of use is limited.

The (meth)acrylate phosphate (D) which can be contained in the adhesive resin composition of the present invention is not specifically limited to monoester, diester or trimester, if it is (meth)acrylate having phosphoric acid ester skeleton. Examples thereof which can be mentioned are, for example, ethylene oxide-modified phenoxylated (meth)acrylate phosphate, ethylene oxide-modified butoxylated (meth)acrylate phosphate, ethylene oxide-modified octyloxylated (meth)acrylate phosphate, ethylene oxide-modified di(meth)acrylate phosphate, ethylene oxide-modified tri(meth)acrylate phosphate, etc., and the product can be available as PM-2 (ethylene oxide-modified dimethacrylate phosphate) produce by Nippon Kayaku Co., Ltd. In the present invention, ethylene oxide-modified dimethacrylate phosphate can be preferably used. One type of the (meth)acrylate phosphate (D) may be used alone or at least two types of the (meth)acrylate phosphate (D) may be used by mixing them at any ratio. When the (meth)acrylate phosphate (D) is contained in the adhesive resin composition of the present invention, the content thereof is generally 0.005 - 5% by weight, preferably 0.05 - 3% by weight.

A urethane (meth)acrylate (E) can be added, if necessary, in the adhesive resin composition of the present invention. The Urethane (meth)acrylate (E) has a function to decrease tilt consistency of the bonded optical disk produced by bonding the substrates using the adhesive containing the urethane (meth)acrylate (E) by improving further adhesiveness and improving flexibility of the cured film of the adhesive. The urethane (meth)acrylate (E) optionally used in the present invention can be obtained by reacting polyalcohol, organic polyisocyanate and a hydroxy(meth)acrylate compound.

In the above, examples of the polyalcohol which can be mentioned are aliphatic polyol such as neopentyl glycol, 3-methyl-1,5-pentanediol, ethylene glycol, propylene glycol, 1,4-butane diol, 1,6-hexane diol, trimethylol propane, pentaerythritol, tricyclodecane dimethylol, bis(hydroxymethyl)cyclohexane, etc., polyester polyol obtained by the reaction of the aliphatic polyol with polybasic acid (e.g. succinic acid, phthalic acid, hexahydrophthalic anhydride, terephthalic acid, adipic acid, azelaic acid, tetrahydrophthalic anhydride, etc.), caprolactone alcohol obtained by the reaction of the aliphatic polyol with ε-caprolactone, polycarbonate polyol (e.g. polycarbonate diol obtained by the reaction of 1,6-hexane diol with diphenyl carbonate) or polyether polyol (e.g. polyethylene glycol, polypropylene glycol, polytetramethylene glycol, ethylene oxide-modified bisphenol A, etc.).

Examples of the organic polyisocyanate which can be mentioned are isophorone diisocyanate, hexamethylene diisocyanate, trilene diisocyanate, xylene diisocyanate, diphenylmethane-4,4'-diisocyanate or dicyclopentanyl isocyanate, etc.

Further, examples of the hydroxy(meth)acrylate compound which can be mentioned are hydroxyethyl (meth)acrylate, hydroxypropyl (meth)acrylate, hydroxybutyl (meth)acrylate, dimethylol cyclohexyl mono(meth)acrylate, hydroxycaprolactone (meth)acrylate, etc.

The urethane (meth)acrylate (E) can be obtained, for example, by the following reaction. To the polyalcohol the organic polyisocyanate is mixed to a level preferably at 1.1 - 2.0 equivalent of the isocyanate group to one equivalent of the hydroxy group, and proceeds with the reaction preferably at 70 - 90°C to produce urethane oligomers. Subsequently, hydroxy (meth)acrylate compound is mixed with the obtained urethane oligomers in a level preferably at 1 - 1.5 equivalent of the hydroxy group to one equivalent of the isocyanate group of the urethane oligomers and reacted preferably at 70 - 90°C to obtain the objective urethane (meth)acrylate (E). Molecular weight of urethane (meth)acrylate (E) is preferably 400 - 10,000.

In the adhesive resin composition of the present invention, one type of the urethane (meth)acrylate (E) can be used alone or at least two types of the urethane (meth)acrylate (E) may be used by mixing them at any ratio. Polyether based urethane acrylate is preferable in the present invention. When the urethane (meth)acrylate (E) is made to contain in the ultraviolet-curable resin composition, the content thereof is generally 1 - 50% by weight, preferably 5 - 40% by weight.

Besides, in the present invention, molecular weight means weight-average molecular weight and the measurement method is performed by light scattering photometry.

An antioxidant (F) can be further added to the adhesive resin composition of the present invention, and examples of the antioxidant (F) which can be mentioned are hindered phenol compounds, amine compounds, sulfur compounds and/or phosphor compounds.

Specific examples of the hindered phenol compounds as the antioxidant (F) which can be mentioned are: 2,6-di-teit-butyl-4-methylphenol, 2,2-methylene-bis(4-methyl-6-tert-butylphenol), 2,2'-methylene-bis(4-ethyl-6-tert-butylphenol), 4,4'-thio-bis(3-methyl-6-tert-butylphenol), 4,4'-butylidene-bis(3-methyl-6-tert-butylphenol), triethylene glycol bis[3-(3-tert-butyl-4-hydroxy-5-methylphenyl)propionate], 1,6-hexanediol bis[3-(3,5-di-tert-butyl-4-hydroxyphenyl) propionate], 2,2-thio-diethylene bis[3-(3,5-di-tert-butyl-4-hydroxyphenyl) propionate], octadecyl 3-(3,5-di-tert-butyl-4-hydroxyphenyl) propionate, 3,5-di-tert-butyl-4-hydroxybenzylphosphonatediethyl ester, 1,3,5-trimethyl-2,4,6-tris(3,5-di-tert-butyl-4-hydroxybenzyl)benzene, and isooctyl 3-(3,5-di-tert-butyl-4-hydroxyphenyl) propionate.

Specific examples of the amine compounds of the antioxidant (F) which can be mentioned are octylated diphenylamine (e.g. 4,4'-dioctyl-diphenylamine, etc.), 4,4'-dicumyl-diphenylamine, 6-ethoxy-2,2,4-trimethyl-1,2-dihydroquinoline, 2,2,4-trimethyl-1,2-dihydroquinoline polymer, etc.

Specific examples of the sulfur compounds of the antioxidant (F) which can be mentioned are 2-mercaptobenzimidazole, 2,4-bis(octylthiomethyl)-o-cresol, 2,4-bis(n-octylthio)-6-(4-hydroxy-3,5-di-tert-butylanilino)-1,3,5-triazine, Adekastab AO-412S (produced by Asahi Denka Corp.).

Specific examples of the phosphor compounds of the antioxidant (F) which can be mentioned are tris(nonylated phenyl) phosphite, Adekastab PER-4C (produced by Asahi Denka Corp.), Adekastab 260 (Asahi Denka Corp.), Adekastab 522A (produced by Asahi Denka Corp.), etc.

Especially preferable compounds among these antioxidants (F) which can be mentioned are hindered phenol compounds. One type of the antioxidant may be used alone or at least two types of the compounds may be used. When the antioxidant (F) is made to contain in the ultraviolet-curable resin composition, the content is generally 0.005 - 10% by weight, preferably 0.01 - 5% by weight.

To the adhesive resin composition of the present invention a high molecular polymer compound such as polyester resin, polycarbonate resin, polyacrylic resin, polyurethane resin and polyvinyl resin may be added.

Further, additives such as organic solvents, silane coupling agents, polymerization inhibitors, leveling agents, antistatic agents, surface lubricant agents, fluorescent whitening agents, light stabilizers (e.g. hindered amine compounds, etc.), fillers, etc. may be added.

The adhesive resin composition of the present invention can be obtained by mixing and dissolving the each component mentioned above from at room temperature to 80°C, and if necessary, contaminants can be removed by the operation such as filtration. It is preferable that in the ultraviolet-curable resin composition of the present invention the addition ratios of the components are properly adjusted in view of applicability so that the viscosity at 25°C thereof ranges from 100 - 5000 mPa·s.

The adhesive resin composition of the present invention can be used as the adhesive for a bonded optical disk, specifically as the adhesive used for bonding the optical disk substrates, in which either or both of the bonded optical disk substrates have total reflection film or translucent reflection film made of silver or a silver alloy. Specifically, the composition is coated to be the film thickness of the bonded adhesive layer from 1 to 100 µm on the optical disk substrate by any method, for example, such as spin coat method, 2P method, roll coat method, screen printing method, etc., and after two optical disk substrates are overlaid, the ultraviolet or near-ultraviolet ray (wavelength about 250 - 400 nm) is irradiated to one side or both sides and the adhesive layer is cured and bonded. Irradiation dose is preferably about 50 - 1000 mJ/cm², most preferably about 100 - 700 mJ/cm². Any irradiating light sources can be used for curing by ultraviolet to near-ultraviolet ray irradiation, if the lamp irradiating ultraviolet to near-ultraviolet ray is used. For example, low-pressure, high-pressure or ultra-high-pressure mercury vapor lamp, metal halide lamp, (pulse) xenon lamp or electrodeless lamp can be mentioned.

As for the optical disk substrate, known substrates such as using gold as the translucent reflection film and using silicon, a silicon compound, silver and a silver alloy can be used. Specifically, the composition of the present invention is preferable for the optical disks using silver or a silver alloy as the total reflection film or translucent reflection film.

The present invention also encompasses the bonded optical disk obtained by bonding the optical disk substrates by the use of the adhesive resin composition of the present invention and by irradiating ultraviolet, specifically the bonded optical disk in which at least one of the optical disk substrates is the optical disk substrate having a total reflection film or translucent reflection film made of silver or a silver alloy. The optical disks are used for DVD-ROM (DVD-5, DVD-10, DVD-9, DVD-14, DVD-18), DVD-R, DVD+R, DVD-RW, DVD+RW, DVD-RAM, DVD-R single sided dual layer type, DVD+R single sided dual layer type, DVD-RW single sided dual layer type, etc.

### Examples

The present invention will be described more specifically by examples, however the present invention is not limited to these examples. In addition, an indication "part(s)" in examples in tables means, unless other wise noted, part(s) by weight.

### Example 1

In a reactor vessel equipped with a stirrer and a thermometer, 25 parts of bisphenol A diglycidyl ether diacrylate (EPA-37) (A), 80 parts of bis(acryloxyneopentyl glycol) adipate (R-526) (B-1), 7 parts of 2-benzyl-2-dimethylamino-1-(4-morpholinophenyl)-butan-1-one (Irgacure 907) (C) and 0.1 part of ethylene oxide-modified dimethacrylate phosphate (PM-2) (D) were mixed and dissolved at 60°C for 1 hour to produce an adhesive resin composition of the present invention. Viscosity of the adhesive resin composition of the present invention at this time was 560 mPa·s at 25°C (measured by using viscometer Type-B, produced by Toki Sangyo Co., Ltd.).

Using the thus obtained adhesive resin composition of the present invention, a silver alloy translucent reflection film substrate and an aluminum alloy total reflection film substrate were bonded by means of the following processes 1 - 4 to produce a bonded optical disk of DVD-9 type of the present invention. Further, using the adhesive resin composition of the present invention, a silver reflection film substrate and a polycarbonate (hereinafter designates as PC) substrate were bonded by means of the following processes 5 - 8 to produce another bonded optical disk of DVD+R type.
1. The silver alloy translucent reflection film substrate was produced by vapor deposition (hereinafter designates as "sputterring") of silver alloy TTP-55A (produced by Target Technologies Co., Ltd.) on the PC substrate with 0.6 mm thickness so that the mean film thickness became 10 nm.

The aluminum alloy total reflection film substrate was produced by sputtering an aluminum alloy (produce by Unaxis Balzers AG) on the PC substrate with 0.6 mm thickness so that the mean film thickness became 45 nm.
2. The adhesive resin composition of the present invention (adhesive) 2.5 g was supplied in a circular pattern on the inner circumference of the circle of the aluminum alloy total reflection film substrate.
3. The silver alloy translucent reflection film substrate with keeping the sputtered face to the downward direction was mounted on the aluminum alloy total reflection film substrate (the sputtered face was kept to the upward direction), and the resulted overlaid substrate was spin coated at a rotating speed of 2000 rpm for 4 seconds to give a film thickness from 45 to 65 µm of the adhesive resin composition of the present invention between the silver alloy translucent reflection film and the aluminum alloy. The apparatus used was manufactured by Origin Electric Co., Ltd.
4. The above adhesive resin composition of the present invention was cured by two xenon flash tubes of the upper side lamp with 8 shots irradiation at 1800 V and the lower side with 4 shots irradiation at 1600 V to bond the disk substrates. Note that the upper side of the DVD disk has the silver alloy translucent reflection film and the lower side thereof has the aluminum alloy total reflection film.
5. The silver reflection film substrate was produced by such that on the PC substrate having a thickness of 0.6 mm with forming a series of pits for DVD+R, an azo dye recording layer was coated by a spin coat method, and after drying at 80°C for 15 minutes, silver (produced by Unaxis Balzers AG) was sputtered to give a mean film thickness of 100 nm.
6. The adhesive resin composition mentioned above of the present invention (adhesive) 2.5 g was supplied in a circular pattern on the inner circumference of the circle of the silver reflection film substrate.
7. The PC substrate with 0.6 mm thickness was mounted on the silver reflection film substrate (the sputtered face was kept to the upward direction), and the resulted overlaid substrate was spin coated at a rotating speed of 3000 rpm for 4 seconds to give a film thickness from 35 to 55 µm of the adhesive resin composition of the present invention between the PC substrate and the silver reflection film. The apparatus used was manufactured by Origin Electric Co., Ltd.
8. The adhesive resin composition of the present invention was cured by using a xenon flash tube with 8 shots irradiation at 1800 V from the upper side to bond the disk substrates. Note that, regarding the direction of DVD disk, the upper side is the PC substrate and the lower side is the silver reflection film substrate.
9. To the DVD+R substrate produced by the above processes 5 - 8, about 4.7 gigabyte signals were recorded by octa-speed writing speed by using the drive (Type: PX-708A) produced by PLEXSTAR Co., Ltd.

### Example 2

Another adhesive resin composition of the present invention was produced by the same manner as in example 1 using the composition listed in Table 1, and subsequently, bonded optical disks were produced by the same manner as in example 1.

### Example 3

Still another adhesive resin composition of the present invention was produced by the same manner as in example 1 using the composition listed in Table 1, and subsequently, bonded optical disks were produced by the same manner as in example 1.

### Comparative example 1

A ultraviolet-curable resin composition containing (meth)acrylate compound having alicyclic structure without containing di(meth)acrylate compound (B-1) having adipate structure as shown in the composition of Table 1 was produced by almost same manner as in example 1, and subsequently, bonded optical disks were produced by the same manner as in example 1.

### [Table 1]

**Table 1. Lists of composition of resin composition of the present invention and resin composition of comparative example**

| | Example | | | Comparative example |
|---|---|---|---|---|
| | 1 | 2 | 3 | 1 |
| EPA-37 | 25 | 25 | 20 | 30 |
| R-526 | 80 | 80 | 80 | |
| Irgacure 907 | 7 | | 7 | |
| Irgacure 184 | | 7 | | 9 |
| FA-512A | | | | 30 |
| PM-2 | 0.1 | 0.1 | 0.1 | 0.1 |
| R-684 | | | | 60 |
| UA-732 | | | 5 | |
| Viscosity (mPa.s 25°C) | 560 | 570 | 540 | 540 |

Each component shown as abbreviation in Table 1 is as follows. Numbers are indicated by parts.
EPA-37: bisphenol A diglycidyl ether diacrylate, product of Nippon Kayaku Co., Ltd.
R-526: bis(acryloxy neopentyl glycol) adipate, product of Nippon Kayaku Co., Ltd.
Irgacure 907: 2-benzyl-2-dimethylamino-1-(4-morpholinophenyl)-butan-1-one,Ciba Specialty Chemicals K.K.
Irgacure 184: 1-hydroxycyclohexyl phenyl ketone, Ciba Specialty Chemicals K.K. FA-512A: Dicyclopentadiene oxyethyl acrylate, Hitachi Chemical Co., Ltd.
PM-2: Ethylene oxide-modified dimethacrylate phosphate, product of Nippon Kayaku Co., Ltd.
R-684: Tricyclodecane dimethylol diacrylate, product of Nippon Kayaku Co., Ltd. UA-732: Polyether urethane acrylate, product of Nippon Kayaku Co., Ltd.

### Example 4

In a reactor vessel equipped with a stirrer and a thermometer, 25 parts of bisphenol A diglycidyl ether diacrylate (EPA-37) (A), 75 parts of caprolactone-modified neopentyl glycol hydroxypivalate diacrylate (HX-220) (B-2), 6 parts of 2-benzyl-2-dimethylainino-1-(4-morpholinophenyl)-butan-1-one (Irgacure 907) (C) and 0.1 part of ethylene oxide-modified dimethacrylate phosphate (PM-2) (D) were mixed and dissolved at 60°C for 1 hour to produce an adhesive resin composition of the present invention. Viscosity of the adhesive resin composition of the present invention at this time was 530 mPa·s at 25°C (measured by using viscometer Type-B, produced by Toki Sangyo Co., Ltd.). Subsequently, bonded optical disks were produced by the same manner as in example 1.

### Example 5

Another adhesive resin composition of the present invention was produced by the same manner as in example 4 using the composition listed in Table 2, and subsequently, bonded optical disks were produced by the same manner as in example 1.

### Example 6

Still another adhesive resin composition of the present invention was produced by the same manner as in example 4 using the composition listed in Table 2, and subsequently, bonded optical disks were produced by the same manner as in example 1.

### Comparative example 2

A ultraviolet-curable resin composition containing (meth)acrylate compound having alicyclic structure without containing di(meth)acrylate compound (B-2) having caprolactone-modified structure as shown in the composition of Table 2 was produced by almost same manner as in example 4, and subsequently, bonded optical disks were produced by the same manner as in example 1.

### [Table 2]

**Table 2. Lists of composition of resin composition of the present invention and resin composition of comparative example**

| | Example | | | Comparative example |
|---|---|---|---|---|
| | 4 5 6 | | | 2 |
| EPA-37 | 25 | 25 | 20 | 30 |
| HX-220 | 75 | 75 | 75 | |
| Irgacure 907 | 6 | | 7 | |
| Irgacure 184 | | 6 | | 9 |
| FA-512A | | | | 30 |
| PM-2 | 0.1 | 0.1 | 0.1 | 0.1 |
| R-684 | | | | 60 |
| UA-732 | | | 5 | |
| Viscosity (mPa.s 25°C) | 530 | 480 | 570 | 540 |

Each component shown as abbreviation in Table 2 is as follows. Numbers are indicated by parts.
EPA-37: bisphenol A diglycidyl ether diacrylate, product of Nippon Kayaku Co., Ltd.
HX-220: caprolactone-modified neopentyl glycol hydroxypivalate diacrylate, product of Nippon Kayaku Co., Ltd.
Irgacure 907: 2-benzyl-2-dimethylamino-1-(4-morpholinophenyl)-butan-1-one,Ciba Specialty Chemicals K.K.
Irgacure 184: 1-hydroxycyclohexyl phenyl ketone, Ciba Specialty Chemicals K.K. FA-512A: Dicyclopentadiene oxyethyl acrylate, Hitachi Chemical Co., Ltd.
PM-2: Ethylene oxide-modified dimethacrylate phosphate, product of Nippon Kayaku Co., Ltd.
R-684: Tricyclodecane dimethylol diacrylate, product of Nippon Kayaku Co., Ltd. UA-732: Polyether urethane acrylate, product of Nippon Kayaku Co., Ltd.

### Example 7

In a reactor vessel equipped with a stirrer and a thermometer, 35 parts of bisphenol A diglycidyl ether diacrylate (EPA-37) (A), 40 parts of propylene oxide-added (2 moles) neopentyl glycol diacrylate (B-3), 7 parts of 1-hydroxycyclohexyl phenyl ketone (Irgacure 184) (C), 40 parts ofphenylglycidyl acrylate (R-128H) (B') and 0.01 part of PM-2 (D) were mixed and dissolved at 60°C for 1 hour to produce a ultraviolet-curable resin composition of the present invention. Viscosity of the ultraviolet-curable resin composition of the present invention at this time was 500 mPa·s at 25°C (measured by using viscometer Type-B). Using the ultraviolet-curable adhesive resin composition, a bonded optical disk was produced by bonding according to the following methods 1 - 4.
1. The silver reflection film substrate was produced by such that azo dye was coated on the PC substrate of 0.6 mm thickness prepared by molding with using DVD+R stamper, and the recording layer was formed by pure silver sputtering. In addition, the counter PC substrate of 0.6 mm thickness was produced by molding.
2. The adhesive 2.5 g was supplied in a circular pattern on the inner circumference of the circle of the PC substrate of 0.6 mm thickness.
3. The DVD substrate sputtered by the silver reflection film with keeping the sputtered face to the downward direction was mounted on the PC substrate, to which the adhesive was supplied, and the resulted overlaid substrate was spin coated at a rotating speed of 2000 rpm for 4 seconds to bond the substrates so that a film thickness of the resin composition became from 45 to 65 µm. The apparatus for bonding optical disk used was the experimental apparatus manufactured by Global Inc.
4. The adhesive was cured by irradiating from the PC side with 8 shots of 60J using xenon flash tube to bond the substrates.

### Example 8

An adhesive resin composition of the present invention was produced by the same manner as in example 7 in the composition listed in Table 3, and subsequently, a bonded optical disk was produced by the same manner as in example 7.

### Comparative example 3

Another adhesive resin composition was produced by the same manner as in example 7 in the composition listed in Table 3, and subsequently, another bonded optical disk was produced by the same manner as in example 7.

### [Table 3]

**Table 3. Lists of composition of resin composition of the present invention and resin composition of comparative example**

| | Example | | Comparative example |
|---|---|---|---|
| | 7 | 8 | 3 |
| EPA-37 | 35 | 35 | 25 |
| NPGDA2PO | 40 | | |
| NPGDA2EO | | 40 | |
| R-684 | | | 90 |
| R-128H | 40 | 40 | |
| PM-2 | 0.01 | 0.01 | 0.01 |
| Irgacure 184 | 7 | 7 | 7 |
| Viscosity (mPa·s 25°C) | 500 | 430 | 560 |

Each component shown as abbreviation in Table 3 is as follows. Numbers are indicated by parts.
EPA-37: bisphenol A diglycidyl ether diacrylate, product of Nippon Kayaku Co., Ltd.
NPGDA2EO: ethylene oxide-modified neopentyl glycol diacrylate, product of Dai-ichi Kogyo Seiyaku Co., Ltd.
NPGDA2PO: propylene oxide-modified neopentyl glycol diacrylate, product of Dai-ichi Kogyo Seiyaku Co., Ltd.
R-684: Tricyclodecane dimethylol diacrylate, product of Nippon Kayaku Co., Ltd.
R-128H: phenylglycidyl acrylate, product of Nippon Kayaku Co., Ltd.
PM-2: Ethylene oxide-modified dimethacrylate phosphate, product of Nippon Kayaku Co., Ltd.
Irgacure 184: 1-hydroxycyclohexyl phenyl ketone, a photopolymerization initiator, produced by Ciba Specialty Chemicals K.K.
Irgacure 907: 2-benzyl-2-dimethylamino-1-(4-morpholinophenyl)-butan-1-one,Ciba Specialty Chemicals K.K.

### Example 9

In a reactor vessel equipped with a stirrer and a thermometer, 35 parts of bisphenol A diglycidyl ether diacrylate (EPA-37) (A), 40 parts of propylene oxide-added (2 moles) 1,6-hexanediol diacrylate (B-4), 7 parts of 1-hydroxycyclohexyl phenyl ketone (Irgacure 184) (C), 40 parts of phenylglycidyl acrylate (R-128H) (B') and 0.01 part of PM-2 (D) were mixed and dissolved at 60°C for 1 hour to produce a ultraviolet-curable resin composition of the present invention. Viscosity of the ultraviolet-curable adhesive resin composition of the present invention at this time was 500 mPa·s at 25°C (measured by using viscometer Type-B). Subsequently a bonded optical disk was produced by the same manner as in example 7.

### Example 10

Another adhesive resin composition of the present invention was produced by the same manner as in example 9 in the composition listed in Table 4, and subsequently, a bonded optical disk was produced by the same manner as in example 7.

### Comparative example 4

An adhesive resin composition was produced in the composition listed in Table 4 by the same manner as in example 9, and subsequently a bonded optical disk was produced by the same manner as in example 7.

### [Table 4]

**Table 4. Lists of composition of resin composition of the present invention and resin composition of comparative example**

| | Example | | Comparative example |
|---|---|---|---|
| | 9 | 10 | 4 |
| EPA-37 | 35 | 35 | 25 |
| HDDA2EO | 40 | 40 | |
| R-684 | | | 90 |
| R-128H | 40 | 40 | |
| PM-2 | 0.01 | 0.01 | 0.01 |
| Irgacure 907 | | 7 | |
| Irgacure 184 | 7 | | 7 |
| Viscosity (mPa·s 25°C) | 430 | 520 | 560 |

Each component shown as abbreviation in Table 4 is as follows. Numbers are indicated by parts.
EPA-37: bisphenol A diglycidyl ether diacrylate, product of Nippon Kayaku Co., Ltd.
HDDA2E0: ethylene oxide-modified 1,6-hexanediol diacrylate, product of Dai-ichi Kogyo Seiyaku Co., Ltd.
R-684: Tricyclodecane dimethylol diacrylate, product of Nippon Kayaku Co., Ltd.
R-128H: phenylglycidyl acrylate, product of Nippon Kayaku Co., Ltd.
PM-2: Ethylene oxide-modified dimethacrylate phosphate, product of Nippon Kayaku Co., Ltd.
Irgacure 184: 1-hydroxycyclohexyl phenyl ketone, a photopolymerization initiator, produced by Ciba Specialty Chemicals K.K.
Irgacure 907: 2-benzyl-2-dimethylamino-1-(4-morpholinophenyl)-butan-1-one, Ciba Specialty Chemicals K.K.

### Test example 1

The bonded optical disks obtained in example 1 to example 6 or comparative example 1 to comparative example 2 were evaluated by the following methods.
1. Appearance of reflection film before and after durability tests (evaluation in common with DVD-9 and DVD+R)
   The bonded optical disks of the present invention and the optical disks of comparative example were allowed to leave in an environment of 80°C and 85% RH (relative humidity) for 500 hours and 700 hours. Condition of the reflection film was observed by eye observation. Results of observation are shown in Table 5 and Table 6 by the mark inscribed below.
   ○: As compared with the observation immediately after bonding, no changes in the condition of the total reflection film and the translucent reflection film were observed in the evaluation after 700 hours.
   Δ: As compared with the observation immediately after bonding, although no changes in the condition of the total reflection film and the translucent reflection film were observed in the evaluation after 500 hours, change in color or large numbers of pinholes were observed in the total reflection film and the translucent reflection film in the evaluation after 700 hours.
   ×: As compared with the observation immediately after bonding, change in color or large numbers of pinholes were observed in the total reflection film and the translucent reflection film in the evaluation after 500 hours.
2. Electric signal of optical disk before and after durability tests

### DVD-9

The bonded optical disks of the present invention and the optical disks of comparative examples were allowed to leave in an environment of 80°C and 85% RH for 700 hours. The electric signal (system jitter, PI error) of the bonded optical disks after the durability test was measured and evaluated using a DVD data signal measuring device DVD-2000 produced by AECO Ltd. System jitter and PI error are electric signals from an optical disk, and it is indicated that the larger the value, the more deteriorated the data of the bonded optical disk.
○: System jitter of not more than 8.0 and PI error of not more than 250.
Δ: System jitter of 8.1 to 9.0 and PI error of251 to 350.
×: System jitter of not less than 9.1 and PI error of not less than 351.

### DVD+R

The bonded optical disks of the present invention and the optical disks of comparative examples were allowed to leave in an environment of 80°C and 85% RH for 480 hours. The electric signal (tilt jitter, PISum8) of the bonded optical disk after the durability test was measured and evaluated using a DVD data signal measuring device DVD-CATS SA-300 made by Audio Dev. Co. Tilt jitter and PISum8 are electric signals from an optical disk, and it is indicated that the larger the value, the more deteriorated the data of the bonded optical disk.
○: Tilt jitter of not more than 8.0 and PISum8 of not more than 250.
Δ: Tilt jitter of 8.1 to 9.0 and PISum8 of 251 to 350.
×: Tilt jitter of not less than 9.1 and PISum8 of not less than 351.

### 3. Evaluation of adhesiveness with reflection film

### DVD-9

Adhesion strength by using the adhesive between the reflection film and the optical disk substrate of the bonded optical disks of the present invention and the bonded optical disks of comparative examples were evaluated. Evaluation was performed by such that small incision of about 5 mm depth was made by a cutter into the bonded interface of the produced bonded optical disk, and the optical disk was broken away to separate from the incised part by the fingers, then condition of the reflection film after incision was observed to evaluate the adhesiveness.
○: Superior in adhesiveness, and more than half of the translucent reflection film or the total reflection film could be separated from the polycarbonate substrate in the separation.
Δ: Insufficient in adhesiveness, and only a part of the translucent reflection film or the total reflection film could be separated from the polycarbonate substrate in the separation.
×: Weak in adhesiveness, and almost all part of the reflection film could not be separated from the polycarbonate substrate.

### DVD+R

Adhesion strength by using the adhesive between the reflection film and the optical disk substrate of the bonded optical disks of the present invention and the bonded optical disk of comparative examples were evaluated. Evaluation was performed by such that small incision of about 5 mm depth was made by a cutter into the bonded interface of the produced bonded optical disk, and the optical disk was broken away to separate from the incised part by the fingers, then condition of the reflection film after incision was observed to evaluate the adhesiveness.
○: Superior in adhesiveness, and more than half of the total reflection film could be separated from the interface with the dye layer.
Δ: Insufficient in adhesiveness, and only a part of the total reflection film could be separated from the interface with the dye layer.
×: Weak in adhesiveness, and almost all part of the reflection film could not be separated from the interface with the dye layer.

Results of evaluation in DVD-9 are described in Table 5 and Table 6.

### [Table 5]

**Table 5. Result of evaluation in DVD-9**

| | Example | | | Comparative example |
|---|---|---|---|---|
| | 1 | 2 | 3 | 1 |
| (1) Appearance of reflection film before and after durability test | ○ | ○ | ○ | ○ |
| (2) Electric signal from optical disk before and after durability test | ○ | ○ | ○ | ○ |
| (3) Evaluation in adhesiveness with reflection film | ○ | ○ | ○ | × |

### [Table 6]

**Table 6. Result of evaluation in DVD-9**

| | Example | | | Comparative example |
|---|---|---|---|---|
| | 4 | 5 | 6 | 2 |
| (1) Appearance of reflection film before and after durability test | ○ | ○ | ○ | ○ |
| (2) Electric signal from optical disk before and after durability test | ○ | ○ | ○ | ○ |
| (3) Evaluation in adhesiveness with reflection film | ○ | ○ | ○ | × |

Results of evaluation in DVD+R are described in Table 7 and Table 8.

### [Table 7]

**Table 7. Result of evaluation in DVD+R**

| | Example | | | Comparative example |
|---|---|---|---|---|
| | 1 | 2 | 3 | 1 |
| (1) Appearance of reflection film before and after durability test | ○ | ○ | ○ | ○ |
| (2) Electric signal from optical disk before and after durability test | ○ | ○ | ○ | ○ |
| (3) Evaluation in adhesiveness with reflection film | ○ | ○ | ○ | × |

### [Table 8]

**Table 8. Result of evaluation in DVD+R**

| | Example | | | Comparative example |
|---|---|---|---|---|
| | 4 | 5 | 6 | 2 |
| (1) Appearance of reflection film before and after durability test | ○ | ○ | ○ | ○ |
| (2) Electric signal from optical disk before and after durability test | ○ | ○ | ○ | ○ |
| (3) Evaluation in adhesiveness with reflection film | ○ | ○ | ○ | × |

Results shown in Table 5 to Table 8 indicate that in the optical disks of the present invention, the durability equivalent to the optical disk produced by bonding the substrates using the ultraviolet-curable resin composition based on the ultraviolet-curable resin composition described in example 1 in Patent Document 1 can be maintained, and furthermore excellent adhesiveness between the reflection film and the cured material of the ultraviolet-curable resin composition can be realized.

### Test example 2

The bonded optical disks obtained in example 7 to example 10 or comparative example 3 to comparative example 4 were evaluated by the following methods.
(1) Appearance of reflection film before and after durability tests
   The obtained bonded optical disks were allowed to leave in an environment of 80°C and 85% RH for 480 hours. Condition of the reflection film was observed by eye observation. Results of observation are shown in Table 9 and Table 10 by the mark inscribed below.
   ○: As compared with the observation immediately after bonding, no change in the condition of the total reflection film was observed in the evaluation after 480 hours.
   Δ: As compared with the observation immediately after bonding, abnormalities such as change in color or white turbidity or generation of pin holes can be confirmed in the evaluation after 480 hours.
   ×: As compared with the observation immediately after bonding, extent of abnormalities such as change in color or white turbidity or generation of pin holes can be largely confirmed in the evaluation after 480 hours.
(2) Electric signal of optical disk before and after durability tests
   To the obtained bonded optical disks, signals were recorded totally by octa-speed writing speed by using the DVD writer PX-708A, produced by Plextor Co., Ltd. The durability test was performed by allowing to leave in an environment of 80°C and 85% RH for 480 hours. The electric signal of the bonded optical disk after the durability test was evaluated using a DVD data signal measuring device DVD-CATS SA-300 produced by Audio Dev. Co. Tilt jitter and PISum8 are electric signals from an optical disk, and it is indicated that the larger the value, the more deteriorated the data of the bonded optical disk.
   ○: Tilt jitter of not more than 8.0 and PISum8 of not more than 250.
   Δ: Tilt jitter of 8.1 to 9.0 and PISum8 of 251 to 350.
   ×: Tilt jitter of not less than 9.1 and PISum8 of not less than 351.
(3) Evaluation of adhesiveness with reflection film
   Adhesion strength of the adhesive with the surfaces of the polycarbonate and the total reflection film of the optical disk substrate was evaluated. Evaluation was performed by such that small incision of about 5 mm depth was made by a cutter into the bonded interface of the obtained bonded optical disk, and the optical disk was broken away to separate from the incised part by the fingers, then condition of the reflection film after incision was observed.
   ○: Superior in adhesiveness, and almost full area of the total reflection film could be separated from the dye layer.
   Δ: Moderate adhesiveness, and a part of the total reflection film could be separated from the dye layer during the separation.
   ×: Weak in adhesiveness, and almost all reflection film could not be separated from the dye layer.

Results of evaluation are listed in Table 9 and Table 10.

### [Table 9]

**Table 9. Results of evaluation**

| | Example | | Comparative example |
|---|---|---|---|
| | 7 | 8 | 3 |
| (1) Appearance of reflection film before and after durability test | ○ | ○ | Δ |
| (2) Electric signal from optical disk before and after durability test | ○ | ○ | ○ |
| (3) Evaluation in adhesiveness with reflection film | ○ | ○ | × |

### [Table 10]

**Table 10. Result of evaluation**

| | Example | | Comparative example |
|---|---|---|---|
| | 9 | 10 | 4 |
| (1) Appearance of reflection film before and after durability test | ○ | ○ | Δ |
| (2) Electric signal from optical disk before and after durability test | ○ | ○ | ○ |
| (3) Evaluation in adhesiveness with reflection film | ○ | ○ | × |

## Claims

1. An ultraviolet-curable adhesive resin composition comprising a bisphenol-type epoxy (meth)acrylate (A), a di(meth)acrylate (B) and a photopolymerization initiator (C), wherein the di(meth)acrylate (B) is at least one di(meth)acrylate selected from the group consisting of a di(meth)acrylate (B-1) having an adipate structure, a di(meth)acrylate (B-2) having a caprolactone-modified structure, an alkylene oxide-modified neopentyl glycol di(meth)acrylate compound (B-3) and an alkylene oxide-modified 1,6-hexanediol di(meth)acrylate compound (B-4).

2. The ultraviolet-curable adhesive resin composition according to Claim 1, wherein the di(meth)acrylate (B-1) having an adipate structure is bis(acryloxyneopentyl glycol) adipate.

3. The ultraviolet-curable adhesive resin composition according to Claim 1, wherein the di(meth)acrylate (B-2) having a caprolactone-modified structure is caprolactone-modified neopentyl glycol hydroxpivalate diacrylate.

4. The ultraviolet-curable adhesive resin composition according to Claim 1, wherein the alkylene oxide-modified neopentyl glycol di(meth)acrylate compound (B-3) is at least one diacrylate selected from the group consisting of propylene oxide-added (2 moles) neopentyl glycol diacrylate, ethylene oxide-modified neopentyl glycol diacrylate and propylene oxide-modified neopentyl glycol diacrylate.

5. The ultraviolet-curable adhesive resin composition according to Claim 1, wherein the alkylene oxide-modified 1,6-hexanediol di(meth)acrylate compound (B-4) is at least one diacrylate selected from the group consisting of propylene oxide -added (2 moles) 1,6-hexanediol diacrylate and ethylene oxide-modified 1,6-hexanediol diacrylate.

6. The ultraviolet-curable adhesive resin composition according to any one of Claims 1 to 5 further comprising a (meth)acrylate phosphate (D).

7. The ultraviolet-curable adhesive resin composition according to any one of Claims 1 to 6 further comprising a urethane (meth)acrylate (E).

8. The ultraviolet-curable adhesive resin composition according to any one of Claims 1 to 7 further comprising an antioxidant (F).

9. An article having a cured layer of the ultraviolet-curable adhesive resin composition according to any one of Claims 1 to 8.

10. A bonded optical disk having a cured layer of the ultraviolet-curable adhesive resin composition according to any one of Claims 1 to 8.

11. The bonded optical disk according to Claim 10, wherein at least one of two optical disk substrates is an optical disk substrate having a total reflection film or a translucent reflection film made of silver or a silver alloy.

12. The bonded optical disk according to Claim 11, wherein one of two optical disk substrates is an optical disk substrate having a total reflection film or a translucent reflection film made of silver or a silver alloy.
